# EUROPÄISCHE PATENTSCHRIFT

(11) **EP 0 742 996 B1**
(45) Veröffentlichungstag und Bekanntmachung des Hinweises auf die Patenterteilung: **31.03.1999**
(21) Anmeldenummer: 96107101.6
(22) Anmeldetag: 06.05.1996
(51) Int. Cl.: A01D 34/00

(54) **Aufhängevorrichtung für Rasenmäher**
Lawn mower suspension device
Dispositif d'accrochage pour tondeuse à gazon

(30) Priorität: 13.05.1995 DE 29507935 U
(43) Veröffentlichungstag der Anmeldung: 20.11.1996
(73) Patentinhaber: WOLF-Geräte GmbH Vertriebsgesellschaft KG, D-57518 Betzdorf/Sieg (DE)
(72) Erfinder: Weid, Helmut, 57520 Niederdreisbach (DE)
(74) Vertreter: Koch, Günther, Dipl.-Ing.

(56) Entgegenhaltungen:
- US-A- 3 004 375
- US-A- 4 286 444
- US-A- 5 054 628
- US-A- 5 082 123
- US-A- 5 136 830

## Beschreibung

Die Erfindung bezieht sich auf eine Kombination aus Aufhängevorrichtung und Rasenmäher der an einem Ende seines Chassis eine Griffmulde mit Eingriffsschlitz aufweist. Die so ergonometrisch angepaßte Tragvorrichtung ermöglicht einen bequemen Transport des Rasenmähers, wenn dieser zur Aufbewahrung abgestellt oder zur Benutzung von seinem Aufbewahrungsort auf die Rasenfläche überführt werden soll. Eine solche Tragvorrichtung, die ein Tragen des Rasenmähers durch eine Hand ermöglicht, ist für Rasenmäher sinnvoll, die relativ leicht ausgebildet sind und eine relativ kurze Baulänge besitzen. Derartige Rasenmäher mit einer Schnittbreite von 32 cm bzw. 36 cm werden unter der Bezeichnung Compakt 32/36 von der Firma Wolf-Geräte hergestellt und vertrieben.

Allgemein besteht der Wunsch, Gartengeräte und auch Rasenmäher möglichst raumsparend in einem Schuppen oder einer Garage unterzubringen, wobei bevorzugt an eine Aufhängung an einer Wand gedacht wird. Die US-PS 42 86 444 beschreibt eine Aufhängevorrichtung mit der handgeführte Gartengeräte, zum Beispiel Rasenmäher, an einer Wand aufgehängt werden können. Die Aufhängevorrichtung besteht aus einem hakenartig aufgerollten Metallblechhalter mit abschließbarem Deckel. In den Kalter wird der Führungsgriff des Rasenmähers eingehängt. Der Rasenmäher selbst befindet sich dann in Bodennähe und beansprucht dort einen erheblichen Raum.

Bei gewichtsmäßig leichteren Rasenmähern besteht das Bedürfnis, diese an einer Wand in mehr oder weniger großem Abstand vom Boden aufzuhängen, um sie räumlich noch günstiger unterbringen zu können, weil sie keine zusätzliche Standfläche beanspruchen.

Die im Handel befindlichen Aufhängehaken, wie sie beispielsweise in der US-PS 50 82 123 beschrieben sind und die zum Aufhängen von Gerätschaften und Fahrrädern bestimmt sind, eignen sich nur bedingt zur Aufhängung von Rasenmähern, weil eine Anpassung an spezielle Teile des Rasenmähers nicht gegeben ist und immer ein Abrutschen zu befürchten ist. Hierdurch kann der Rasenmäher selbst oder es können in seiner Nähe befindliche Gegenstände beschädigt werden.

Der Erfindung liegt die Aufgabe zugrunde, eine gattungsgemäße Kombination so auszubilden, daß eine zuverlässige Aufhängung eines gattungsgemäßen Rasenmähers an einer Wand gewährleistet wird.

Gelöst wird die gestellte Aufgabe durch die Gesamtheit der im Patentanspruch 1 angegebenen Merkmale.

Durch die Erfindung wird erreicht, daß der Rasenmäher von der Aufhängevorrichtung formschlüssig abgestützt wird, so daß er nicht abrutschen kann und trotzdem bequem aufgehängt und abgenommen werden kann.

Gemäß einer bevorzugten Ausführung der Erfindung ist die Aufhängevorrichtung als geknickter Bügel ausgebildet, dessen freie Enden senkrecht längs der Wand verlaufen, sich an dieser abstützen und an der Wand durch eingedübelte Schrauben befestigt sind. Der Halter ist von diesen Schenkelenden nach vorn abgeknickt und verläuft ein Stück in waagerechter Richtung, um dann schräg nach oben zu verlaufen. Der gerade verlaufende Abschnitt ist so bemessen, daß er dem Abstand zwischen Rollfläche des Rasenmähers und Eingriffsschlitz im Chassis entspricht, so daß ein sicheres Aufhängen gewährleistet ist.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 ist eine perspektivische Ansicht einer erfindungsgemäßen aus Aufhängevorrichtung und Rasenmäher bestehenden Kombination;
Fig. 2 ist eine perspektivische Ansicht der Aufhängevorrichtung gemäß Fig. 1 in größerem Maßstab;
Fig. 3 ist eine Schnittansicht der für die Aufhängung wesentlichen Teile von Rasenmäher und Aufhängevorrichtung.

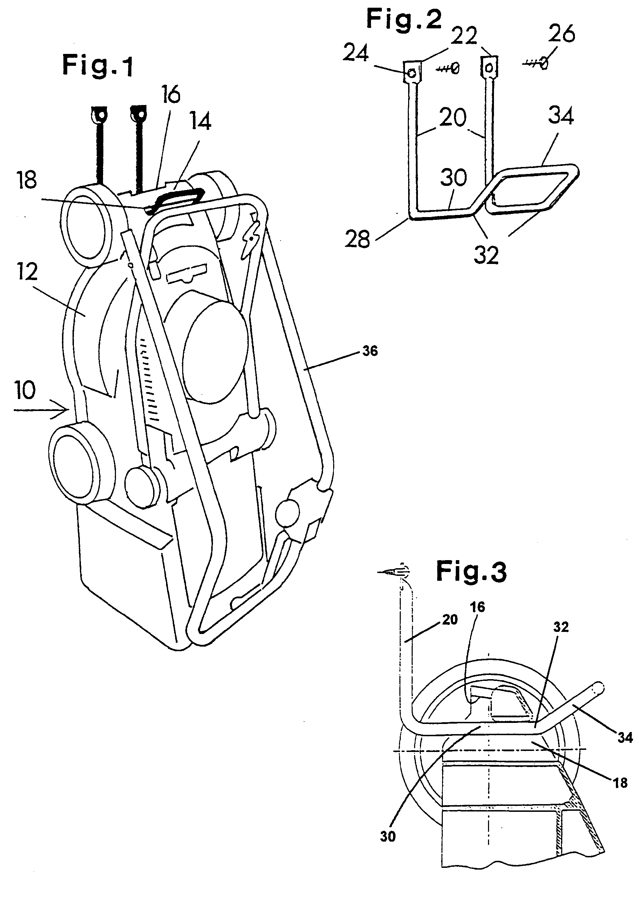

Der in Fig. 1 dargestellte Rasenmäher 10 besitzt ein Chassis 12, das in dem in Fahrtrichtung vorn liegenden Abschnitt 14 zwischen den Rädern eine Griffmuldenausnehmung 16 und einen Eingriffsschlitz 18 aufweist, in die man bequem mit der Hand eingreifen kann, um den Rasenmäher in vertikaler Lage zu tragen.

Gemäß dem dargestellten Ausführungsbeispiel besteht die Aufhängevorrichtung aus einem abgeknickten Bügel. Dieser weist zwei vertikale Schenkel 20 auf, die an ihren oberen Enden zu Flanschen 22 ausgebreitet sind, die Löcher 24 aufweisen, durch die Schrauben 26 geführt werden können. Die Schenkel 20 gehen über einen Knick 28 in einen horizontalen Abschnitt 30 über, und über eine weitere Knickstelle 32 schließt sich ein schräg nach oben gerichteter Bügel 34 an. Die Breite des Bügels und der gegenseitige Abstand der Abschnitte 30 ist so bemessen, daß der Eingriffsschlitz 18 mit geringem Spiel über den Bügel paßt, so daß ein leichtes Aufsetzen gewährleistet, ein seitliches Abrutschen jedoch verhindert ist. Dadurch, daß der Bügel schräg nach oben gerichtet ist, wird ein Abrutschen nach vorn verhindert. Zusätzlich kann in das vom Chassis vorstehende Bügelende noch ein Pflock o. dgl. eingefügt werden, der eine formschlüssige Abstützung bewirkt und auch bei unbeabsichtigter, ungeschickter Bewegung ein Herunterfallen des Rasenmähers verhindert.

Der Führungsbügel 36 ist, wie aus Fig. 1 ersichtlich, platzsparend über dem Mäher nach unten geklappt.

Die Aufhängevorrichtung kann aus einem vollen Rundmaterial gebogen sein, sie kann jedoch auch aus Rohrmaterial bestehen. Wichtig ist, daß die Aufhängevorrichtung genau in jenen Abmessungen dimensioniert ist, die der Eingriffsschlitz 18 aufweist. Demgemäß kann die Aufhängevorrichtung nicht nur als einstückiger Bügel ausgebildet sein, sondern es könnten auch zwei, im entsprechenden Abstand gehaltene, an den Schlitzenden anliegende Haken vorgesehen sein, deren gegenseitiger Abstand in irgendeiner Weise fixiert ist.

## Patentansprüche

1. Kombination aus Aufhängevorrichtung und Rasenmäher (10), der an einem Ende (14) seines Chassis (12) eine Griffmulde (16) mit Eingriffsschlitz (18) aufweist, mit den folgenden Merkmalen:
- der Eingriffsschlitz (18) erstreckt sich zwischen den Laufrädern in dem vorderen Abschnitt (14) des Chassis (12);
- von einem an einer Wand zu befestigenden Halter (20) steht ein Träger (30, 34) vor, der entsprechend dem Eingriffsschlitz geformt ist, so daß der Eingriffsschlitz (18) mit geringem Spiel darüber paßt, und der Rasenmäher von der Aufhängevorrichtung formschlüssig nach oben, nach unten und seitlich abgestützt wird.

2. Kombination nach Anspruch 1,
dadurch gekennzeichnet, daß der Träger aus einem abgeknickten, U-förmigen Bügel (20, 30, 34) besteht.

3. Kombination nach Anspruch 2,
dadurch gekennzeichnet, daß der Bügel parallel verlaufende freie Schenkel (20) besitzt, die an ihrem freien oberen Ende zu Flanschen (22) mit Löchern (24) ausgeformt sind, und daß von den Schenkeln (20) über einen rechteckigen Knick (28) nach vorn verlaufende Abschnitte (30) anschließen, die sich über eine weitere Knickstelle (32) zu einem schräg nach oben verlaufenden Bügel (34) erstrecken.

4. Kombination nach Anspruch 1,
dadurch gekennzeichnet, daß der Halter aus einer zweifach abgekröpften Platte besteht, deren Breite entsprechend dem Eingriffsschlitz (18) bemessen ist.

5. Kombination nach den Ansprüchen 1 bis 3, dadurch gekennzeichnet, daß der Halter aus massivem Stabmaterial besteht.

6. Kombination nach den Ansprüchen 1 bis 3, dadurch gekennzeichnet, daß der Halter aus Rohrmaterial besteht.

## Claims

1. Combination of a suspension arrangement and a lawnmower (10) which at one end (14) of its chassis (12) has a recessed grip (16) with an engagement slot (18), having the following features:
- the engagement slot (18) extends between the wheels in the front portion (14) of the chassis (12);
- protruding from a holder (20) which is to be attached to a wall is a bracket (30, 34) of a form corresponding to the engagement slot, with the result that the engagement slot (18) fits over said bracket with just a small clearance, and the lawnmower is positively supported by the suspension arrangement towards the top, bottom and sides.

2. Combination according to claim 1,
characterised in that the bracket consists of a bent U-shaped frame (20, 30, 34).

3. Combination according to claim 2,
characterised in that the frame possesses parallel free legs (20) which at their free top end are shaped to form flanges (22) with holes (24), and that contiguous with the legs (20), via a right-angled bend (28), are forwardly extending sections (30) which extend via a further bending point (32) into a diagonally upwardly running frame (34).

4. Combination according to claim 1,
characterised in that the holder consists of a plate which is bent twice at right angles and whose width is dimensioned to suit the engagement slot (18).

5. Combination according to claims 1 to 3, characterised in that the holder is made from solid bar.

6. Combination according to claims 1 to 3, characterised in that the holder is made from tube.

## Revendications

1. Combinaison d'un dispositif d'accrochage et d'une tondeuse à gazon (10) qui comporte à une extrémité (14) de son châssis (12) un creux de préhension (16) avec fente d'insertion (17), présentant les caractéristiques suivantes :
- la fente d'insertion (18) s'étend entre les roues dans la partie avant (14) du châssis (12);
- sur un support (20) destiné à être fixé à un mur fait saillie une partie porteuse (30, 34) qui est configurée en fonction de la fente d'insertion de manière que la fente d'insertion s'ajuste avec un faible jeu sur cette partie porteuse et que la tondeuse à gazon soit maintenue par le dispositif d'accrochage par complémentarité de forme vers le haut, vers le bas et vers les côtés.

2. Combinaison suivant la revendication 1, caractérisée par le fait que la partie porteuse est constituée par un étrier (20, 30, 40) en U, coudé.

3. Combinaison suivant la revendication 2, caractérisée par le fait que l'étrier présente des branches libres (20) s'étendant parallèlement, dont les extrémités libres supérieures sont conformées en platines (22) avec des trous (24) et que les branches (20) se raccordent par un coude (28) à angle droit à des tronçons (30) s'étendant vers l'avant, lesquels se raccordent par un coude supplémentaire (32) à un étrier (34) s'étendant de façon oblique vers le haut.

4. Combinaison suivant la revendication 1, caractérisée par le fait que le support est constitué par une plaque doublement coudée dont la largeur est choisie en fonction de la fente d'insertion (18).

5. Combinaison suivant les revendications 1 à 3, caractérisée par le fait que le support est constitué par un matériau massif en forme de barre.

6. Combinaison suivant les revendications 1 à 3 caractérisée par le fait que le support est constitué par un matériau tubulaire.
